# EUROPEAN PATENT APPLICATION

(11) **EP 4 354 637 A1**
(43) Date of publication of application: **17.04.2024**
(21) Application number: 21960937.7
(22) Date of filing: 20.10.2021
(51) Int. Cl.: H01M 50/531, H01M 50/536

(54) **BATTERY CELL, BATTERY, AND ELECTRIC DEVICE**

(71) Applicant: Contemporary Amperex Technology Co., Limited, Fujian PRC 352100 (CN)
(72) Inventor: SUN, Dongsheng, Ningde, Fujian 352000 (CN); CHI, Qingkui, Ningde, Fujian 352000 (CN); GU, Hui, Ningde, Fujian 352000 (CN); CHAI, Zhisheng, Ningde, Fujian 352000 (CN); ZHU, Guanghao, Ningde, Fujian 352000 (CN)
(74) Representative: Rowlands, Stuart Michael
(86) International application number: PCT/CN2021/125105
(87) International publication number: WO 2023/065184

(57) **Abstract**

The present application relates to the technical field of batteries, and provides a battery cell, a battery, and an electric device. The battery cell comprises an electrode assembly; the side of a first electrode plate of the electrode assembly in the width direction is provided with a plurality of soldering portions, and the plurality of soldering portions are provided at intervals in the length direction of the first electrode plate; the first electrode plate comprises a winding start end and a winding ending end, one of the plurality of soldering portions closest to the winding start end is a first soldering portion, and one of the plurality of soldering portions closest to the winding ending end is a second soldering portion; the first electrode plate comprises a main body segment from the first soldering portion to the second soldering portion, the main body segment is divided into a plurality of sub-segments having a length of L, and the total length of each sub-segment soldering portion is not less than 5%*L, wherein 200 mm ≤L ≤ 1200 mm, so that the distribution of soldering portions formed by soldering the first electrode plate and a current collecting component is more reasonable, the internal resistance of the battery cell is reduced, and the actual overcurrent requirement can be satisfied, thereby improving the power performance of the battery cell.

## Description

### TECHNICAL FIELD

This application relates to the technical field of batteries, and in particular, to a battery cell, a battery, and an electrical device.

### BACKGROUND

Batteries are widely used in electronic devices such as a mobile phone, a notebook computer, an electric power cart, an electric vehicle, an electric airplane, an electric ship, an electric toy car, an electric toy ship, an electric toy airplane, and an electric tool.

In the development of battery technology, power performance of a battery is also important in addition to safety performance of the battery. Due to a high internal resistance of existing batteries, the power performance of the batteries is relatively low. Therefore, how to enhance the power performance of the battery has become an urgent problem to be solved in the technical field of batteries.

### SUMMARY

Some embodiments of this application provide a battery cell, a battery, and an electrical device to enhance power performance of the battery.

According to a first aspect, an embodiment of this application provides a battery cell, including an electrode assembly. The electrode assembly includes a first electrode plate. A plurality of weld portions are disposed on one side of the first electrode plate along a width direction, and the plurality of weld portions are spaced apart along a length direction of the first electrode plate.

The electrode assembly has a jelly-roll structure. The first electrode plate includes a winding start end and a winding termination end. A weld portion closest to the winding start end among the plurality of weld portions is a first weld portion. A weld portion closest to the winding termination end among the plurality of weld portions is a second weld portion. The first electrode plate includes a body section. The body section is from an edge of the first weld portion to an edge of the second weld portion, the edge of the first weld portion being close to the winding start end, and the edge of the second weld portion being close to the winding termination end. The body section is equally divided into a plurality of subsections, each subsection being L in length. A total length of the weld portions of each subsection is not less than 5%×L, where 200 mm ≤ L ≤ 1200 mm.

In existing technologies, the current collection component is welded to the electrode assembly by continuous linear laser welding or pulsation welding, leaving weld marks to be X-shaped, ring-shaped, or the like. As can be seen from an unwound electrode plate, along a length direction of the electrode plate, the weld portions in some sections are relatively dense, the weld portions in other sections are relatively sparse, and the distribution of the weld portions on the electrode plate is nonuniform. For a section with sparse weld portions, an effective welding length of the electrode plate (that is, a total length of the weld portions of the section) is not enough to match the length of the electrode plate. Consequently, the flow capacity of electrical current between the electrode plate and the current collection component is low, and the internal resistance of the battery cell is high, thereby impairing the power performance of the battery cell. By contrast, in the above technical solution, after the current collection component is welded to one side of the first electrode plate along the width direction, a plurality of spaced-out weld portions are formed in the length direction of the first electrode plate. The body portion defined by the first weld portion and the second weld portion on the first electrode plate is divided into a plurality of subsections of equal length along the length direction of the first electrode plate, the first weld portion being close to the winding start end, and the second weld portion being close to the winding termination end. A total length of the weld portions of each subsection is not less than 5% of the length of the subsection. In this way, the distribution of the weld portions formed by the welding between the first electrode plate and the current collection component is more reasonable, thereby reducing the internal resistance of the battery cell, satisfying the practical flow capacity requirement, and in turn, improving the power performance of the battery cell. The length of the subsection ranges from 200 mm to 1200 mm, thereby making the winding length of the first electrode plate meet practical product requirements and achieving a relatively high energy density of the battery cell.

In some embodiments in the first aspect of this application, an absolute value of a difference of the total length of the weld portions between any two subsections is less than or equal to 10 mm.

In the above technical solution, by controlling the absolute value of the difference of the total length of the weld portions between any two subsections to be less than or equal to 10 mm, the difference of the total length of the weld portions between different subsections is minimized, thereby making the distribution of the weld portions more reasonable, reducing the internal resistance of the battery cell, making the flow capacity difference relatively small between different subsections, meeting the practical flow capacity requirement, and in turn, improving the power performance of the battery cell. Controlling the absolute value of the difference of the total length of the weld portions between any two subsections to be less than or equal to 10 mm is equivalent to controlling a discrepancy of the welding width between different subsections to be less than or equal to 10 mm. Allowing the discrepancy of the total welding length between the subsections can reduce welding difficulty.

In some embodiments in the first aspect of this application, the total length of the weld portions is identical between any two subsections.

In the above technical solution, when the total length of the weld portions is identical between any two subsections, there is no difference of the total length of the weld portions between different subsections, thereby making the distribution of the weld portions more reasonable, minimizing the internal resistance of the battery cell, making the flow capacity identical between different subsections, meeting the practical flow capacity requirement, and in turn, improving the power performance of the battery cell.

In some embodiments in the first aspect of this application, an absolute value of a difference of a number of the weld portions between any two subsections is less than or equal to 10.

In the above technical solution, by controlling the absolute value of the difference of the number of the weld portions between any two subsections to be less than or equal to 10, the difference of the total length of the weld portions between different subsections is minimized, thereby making the distribution of the weld portions more reasonable, reducing the internal resistance of the battery cell, making the flow capacity difference relatively small between different subsections, meeting the practical flow capacity requirement, and in turn, improving the power performance of the battery cell. Controlling the absolute value of the difference of the number of the weld portions between any two subsections to be less than or equal to 10 is equivalent to allowing a discrepancy of the number of the weld portions between different subsections. Allowing the discrepancy of the total welding length between the subsections can reduce welding difficulty.

In some embodiments in the first aspect of this application, the number of the weld portions is identical between any two subsections.

In the above technical solution, when the number of the weld portions is identical between any two subsections, the difference of the total length of the weld portions between different subsections is minimized, thereby making the distribution of the weld portions more reasonable, reducing the internal resistance of the battery cell, making the flow capacity identical between different subsections, meeting the practical flow capacity requirement, and in turn, improving the power performance of the battery cell.

In some embodiments in the first aspect of this application, the first electrode plate further includes a winding start section contiguous to the body section. The winding start section is from the winding start end to the edge of the first weld portion, the edge being close to the winding start end.

In the above technical solution, the winding start section is from the winding start end to the edge of the first weld portion, the edge being close to the winding start end. To be specific, the winding start end and the edge of the first weld portion define the winding start section, the edge of the first weld portion being close to the winding start end. No weld portion is formed on the winding start section, so that there is no welding relationship between the winding start section and the current collection component, thereby facilitating the welding between the current collection component and the electrode terminal to output electrical energy of the battery cell.

In some embodiments in the first aspect of this application, the winding start section is A in length, satisfying A ≤ L.

In the above technical solution, along the length direction of the first electrode plate, the distance between the winding start end and the first weld portion is less than a length of a characteristic section. To be specific, the length of the winding start section without a weld portion is less than the length of a subsection with a weld portion, thereby preventing the section without a weld portion on the first electrode plate from being excessively long, and ensuring stable output of electrical energy of the battery cell.

In some embodiments in the first aspect of this application, the first electrode plate further includes a winding termination section contiguous to the body section. The winding termination section is from the winding termination end to the edge of the second weld portion, the edge being close to the winding termination end.

In the above technical solution, the winding termination section is from the winding termination end to the edge of the second weld portion, the edge being close to the winding termination end. To be specific, the winding termination end and the edge of the second weld portion define the winding termination section, the edge of the second weld portion being close to the winding termination end. No weld portion is formed on the winding termination section. There is no welding relationship between the winding termination section and the corresponding current collection component, thereby facilitating the welding between the current collection component and the electrode terminal to output electrical energy of the battery cell.

In some embodiments in the first aspect of this application, the winding termination section is B in length, satisfying B ≤ L.

In the above technical solution, along the length direction of the first electrode plate, the length of the winding termination section is less than the length of the subsection. To be specific, the length of the winding start section without a weld portion is less than the length of a subsection with a weld portion, thereby preventing the section without a weld portion on the first electrode plate from being excessively long, and ensuring stable output of electrical energy of the battery cell.

In some embodiments in the first aspect of this application, among two adjacent circles of the first electrode plate, a number of the weld portions of a circle close to a winding center of the electrode assembly is less than a number of the weld portions of a circle away from the winding center.

In the above technical solution, for a jelly-roll type electrode assembly, among two adjacent circles of the first electrode plate, the length of the circle close to the winding center is less than the length of the circle away from the winding center. During welding, the number of weld portions formed on the circle close to the winding center of the jelly-roll type electrode assembly is smaller than the number of weld portions formed on the circle away from the winding center. In this way, the length of each circle of the first electrode plate and the corresponding number of the weld portions on each circle of the first electrode plate match the total length of the weld portions, thereby making the distribution of the weld portions more reasonable, reducing the internal resistance of the battery cell, meeting the practical flow capacity requirement, and in turn, improving the power performance of the battery cell.

In some embodiments in the first aspect of this application, the battery cell further includes a housing, an end cap assembly, and a current collection component. The housing is configured to accommodate the electrode assembly. The housing includes an opening. The end cap assembly includes an end cap and electrode terminals. The end cap is configured to cover the opening. Each electrode terminal is mounted on the end cap. The current collection component is located between the end cap and the electrode assembly, and configured to connect a tab portion of the electrode assembly to the electrode terminal. The tab portion is formed by winding an uncoated portion of the first electrode plate. At least a part of the current collection component is welded to the tab portion to form the plurality of weld portions.

In the above technical solution, at least a part of the current collection component is welded to the tab portion to form a plurality of weld portions. The body portion defined by the first weld portion and the second weld portion on the first electrode plate is divided into a plurality of subsections of equal length along the length direction of the first electrode plate, the first weld portion being close to the winding start end, and the second weld portion being close to the winding termination end. A total length of the weld portions of each subsection is not less than 5% of the length of the subsection. In this way, the distribution of the weld portions formed by the welding between the first electrode plate and the current collection component is more reasonable, thereby reducing the internal resistance of the battery cell, satisfying the practical flow capacity requirement, and in turn, improving the power performance of the battery cell.

In some embodiments in the first aspect of this application, the first electrode plate further includes a winding start section from the winding start end to the edge of the first weld portion, the edge being close to the winding start end. The uncoated region of the body section is wound to form a first part, the uncoated region of the winding start section is wound to form a second part, and the second part is located inside the first part along a radial direction. The current collection component includes a first current collection portion and a second current collection portion arranged continuously along the radial direction. The first current collection portion is arranged opposite to the first part along the width direction of the first electrode plate and is welded to the first part to form the plurality of weld portions. The second current collection portion is arranged opposite to the second part along the width direction of the first electrode plate and is welded to the electrode terminal.

In the above technical solution, the uncoated region of the body section is wound to form the first part welded to the first current collection portion of the current collection component, thereby implementing electrical connection between the electrode assembly and the current collection component. The winding start section is from the winding start end to the edge of the first weld portion, the edge being close to the winding start end. To be specific, the winding start end and the edge of the first weld portion define the winding start section, the edge of the first weld portion being close to the winding start end. No weld portion is formed on the winding start section, so that there is no welding relationship between the second part and the current collection component, the second part being formed by winding the uncoated region of the winding start section. No weld marks are formed on the second current collection portion opposite to the second part, thereby making it convenient to weld the current collection component to the electrode terminal through the second current collection portion to output electrical energy of the battery cell.

In some embodiments in the first aspect of this application, the first electrode plate further includes a winding termination section from the winding termination end to the edge of the second weld portion, the edge being close to the winding termination end. The uncoated region of the body section is wound to form a first part, the uncoated region of the winding termination section is wound to form a third part, and the third part is located outside the first part along a radial direction. The current collection component includes a first current collection portion and a third current collection portion arranged continuously along the radial direction. The first current collection portion is arranged opposite to the first part along the width direction of the first electrode plate and is welded to the first part to form the plurality of weld portions. The third current collection portion is arranged opposite to the third part along the width direction of the first electrode plate and is welded to the electrode terminal.

In the above technical solution, the uncoated region of the body section is wound to form the first part welded to the first current collection portion of the current collection component, thereby implementing electrical connection between the electrode assembly and the current collection component. The winding termination section is from the winding termination end to the edge of the second weld portion, the edge being close to the winding termination end. To be specific, the winding termination end and the edge of the second weld portion define the winding termination section, the edge of the second weld portion being close to the winding termination end. No weld portion is formed on the winding termination section, so that there is no welding relationship between the third part and the current collection component, the third part being formed by winding the uncoated region of the winding termination section. Therefore, no weld marks are formed on the third current collection portion opposite to the third part, thereby making it convenient to weld the current collection component to the electrode terminal through the third current collection portion to output electrical energy of the battery cell.

According to a second aspect, an embodiment of this application provides a battery, including the battery according to any embodiment according to the first aspect.

In the above technical solution, a battery containing the battery cell disclosed in an embodiment in the first aspect of this application is provided. The body portion defined by the first weld portion and the second weld portion on the first electrode plate of the battery cell is divided into a plurality of subsections of equal length, the first weld portion being close to the winding start end, and the second weld portion being close to the winding termination end. A total length of the weld portions of each subsection is not less than 5% of the length of the subsection. In this way, the distribution of the weld portions formed by the welding between the first electrode plate and the current collection component is more reasonable, thereby reducing the internal resistance of the battery cell, satisfying the practical flow capacity requirement, and in turn, improving the power performance of the battery.

According to a third aspect, an embodiment of this application provides an electrical device, including the battery according to any embodiment in the second aspect of this application.

In the above technical solution, the electrical device employs the battery provided by an embodiment in the second aspect of this application. The body portion defined by the first weld portion and the second weld portion on the first electrode plate of the battery cell is divided into a plurality of subsections of equal length, the first weld portion being close to the winding start end, and the second weld portion being close to the winding termination end. A total length of the weld portions of each subsection is not less than 5% of the length of the subsection. In this way, the distribution of the weld portions formed by the welding between the first electrode plate and the current collection component is more reasonable, thereby reducing the internal resistance of the battery, satisfying the practical flow capacity requirement, and in turn, improving the power performance of the battery.

### BRIEF DESCRIPTION OF DRAWINGS

To describe technical solutions in embodiments of this application more clearly, the following outlines the drawings to be used in the embodiments. It will be understood that the following drawings show merely some embodiments of this application, and therefore, are not intended to limit the scope. A person of ordinary skill in the art may derive other related drawings from the drawings without making any creative efforts.
FIG. 1 is a schematic structural diagram of a vehicle according to some embodiments of this application;
FIG. 2 is a schematic structural diagram of a battery according to some embodiments of this application;
FIG. 3 is an exploded view of a battery cell according to some embodiments of this application;
FIG. 4 is a schematic structural diagram of an electrode assembly according to some embodiments of this application;
FIG. 5 is a schematic diagram of an unwound first electrode plate according to some embodiments of this application;
FIG. 6 is a schematic diagram of dimensions of an unwound first electrode plate according to some embodiments of this application;
FIG. 7 is a schematic structural diagram of an electrode assembly according to some other embodiments of this application;
FIG. 8 is a schematic diagram of an unwound first electrode plate according to some other embodiments of this application;
FIG. 9 is a schematic diagram of dimensions of an unwound first electrode plate according to some other embodiments of this application;
FIG. 10 is a schematic diagram of an unwound first electrode plate according to still other embodiments of this application;
FIG. 11 is a schematic diagram of dimensions of an unwound first electrode plate according to still other embodiments of this application;
FIG. 12 is a schematic diagram of an electrode assembly according to still other embodiments of this application;
FIG. 13 is a schematic structural diagram of an electrode assembly according to yet other embodiments of this application;
FIG. 14 is a schematic diagram of a welded current collection component according to some embodiments of this application;
FIG. 15 is a schematic diagram of a welded current collection component according to some other embodiments of this application; and
FIG. 16 is a schematic diagram of a welded current collection component according to still other embodiments of this application.

List of reference numerals: 1000-vehicle; 100-battery; 10-box; 11-accommodation space; 12-first part; 13-second part; 20-battery cell; 21-housing; 211-opening; 22-electrode assembly; 221-first electrode plate; 2211-coated region; 2212-uncoated region; 222-weld portion; 222a-first weld portion; 222b-second weld portion; 223-winding start end; 224-winding termination end; 225-body section; 2251-subsection; 226-winding center hole; 226a-first region; 226b-second region; 226c-third region; 226d-fourth region; 226e-fifth region; 226f-sixth region; 227a-first circle; 227b-second circle; 227c-third circle; 227d-fourth circle; 227e-fifth circle; 228-winding start section; 229-winding termination section; 23-end cap assembly; 231-end cap; 232-electrode terminal; 24-current collection component; 241-first current collection portion; 242-second current collection portion; 243-third current collection portion; 200-controller; 300-motor; X-width direction of first electrode plate; Y-length direction of first electrode plate.

### DETAILED DESCRIPTION OF EMBODIMENTS

To make the objectives, technical solutions, and advantages of the embodiments of this application clearer, the following gives a clear and complete description of the technical solutions in the embodiments of this application with reference to the drawings in the embodiments of this application. It will be apparent that the described embodiments are merely a part of but not all of the embodiments of this application. The components described and illustrated in the drawings according to the embodiments of this application generally may be arranged and designed in a variety of different configurations.

Therefore, the following detailed description of the embodiments of this application provided with reference to the drawings is not intended to limit the scope of this application as claimed, but merely represents selected embodiments of this application. All other embodiments derived by a person of ordinary skill in the art based on the embodiments of this application without making any creative efforts still fall within the protection scope of this application.

It is hereby noted that, to the extent that no conflict occurs, the embodiments of this application and the features in the embodiments may be combined with each other.

It is hereby noted that similar reference numerals and letters indicate similar items in the following drawings. Therefore, once an item is defined in one drawing, the item does not need to be further defined or construed in subsequent drawings.

In the description of the embodiments of this application, it is hereby noted that an indicated direction or positional relationship is a direction or positional relationship based on illustration in the drawings, or a direction or positional relationship by which a product in use according to this application is usually placed, or a direction or positional relationship commonly understood by a person skilled in the art, and is merely intended for ease or brevity of describing this application, but does not indicate or imply that the indicated apparatus or component is necessarily located in the specified direction or constructed or operated in the specified direction. Therefore, the indicated direction or positional relationship is never to be understood as a limitation on this application. In addition, the terms "first", "second", and "third" are merely intended for distinct description, but not intended to indicate or imply order of precedence.

Currently, as can be seen from the market trend, the application of power batteries is increasingly extensive. Power batteries are not only used in energy storage power systems such as hydro, thermal, wind, and solar power stations, but also widely used in electric means of transport such as electric bicycles, electric motorcycles, and electric vehicles, and used in many other fields such as military equipment and aerospace. The market demand for power batteries keeps soaring with the increase of the application fields of the power batteries.

The inventor hereof is aware that a battery cell includes a housing, an end cap assembly, and an electrode assembly. The end cap assembly fits and covers the housing to provide a hermetically sealed space for the electrode assembly and an electrolytic solution. Electrical energy of the electrode assembly may be output out of the housing through electrode terminals on the end cap assembly. The electrode assembly is welded to the current collection component through a tab. An electrode terminal is electrically connected to the current collection component to output electrical energy of the battery. The electrode assembly includes an electrode plate. The electrode plate includes a coated region coated with an active material layer and an uncoated region not coated with the active material layer. The uncoated region of the electrode plate is wound to form a tab portion. The current collection component is welded to the tab portion to form a plurality of weld portions.

For a jelly-roll all-tab electrode assembly, the tab needs to be flattened before being welded to the current collection component. In existing technologies, the current collection component is welded to the electrode assembly by continuous linear laser welding or pulsation welding, leaving weld marks to be X-shaped, ring-shaped, or the like. As can be seen from an unwound electrode plate, along a length direction of the electrode plate, the weld portions in some sections are relatively dense, the weld portions in other sections are relatively sparse, and the distribution of the weld portions on the electrode plate is nonuniform. For a section with sparse weld portions, an effective welding length of the electrode plate (that is, a total length of the weld portions of the section) is not enough to match the length of the electrode plate. Consequently, the flow capacity of electrical current between the electrode plate and the current collection component is low, and the internal resistance of the battery cell is high, thereby impairing the power performance of the battery cell.

In view of the above situation, in order to solve the problem that unreasonable distribution of weld positions between the electrode plate and the current collection component leads to a high internal resistance and a low flow capacity of the battery cell, the inventor has designed a battery cell after in-depth research. In the battery cell, a body portion defined by a first weld portion and a second weld portion on a first electrode plate is divided into a plurality of subsections of equal length, the first weld portion being close to a winding start end, and the second weld portion being close to the winding termination end. A total length of the weld portions of each subsection is not less than 5% of the length of the subsection. In this way, the distribution of the weld portions formed by the welding between the first electrode plate and the current collection component is more reasonable, thereby reducing the internal resistance of the battery cell, satisfying the practical flow capacity requirement, and in turn, improving the power performance of the battery cell.

The technical solutions described in this embodiment of this application are applicable to a battery and an electrical device that uses the battery.

The electrical device may be a vehicle, a mobile phone, a portable device, a notebook computer, a ship, a spacecraft, an electric toy, a power tool, or the like. The vehicle may be an oil-fueled vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, such as a game console, an electric car toy, an electric ship toy, an electric airplane toy, and the like. The power tool includes an electrical metal cutting tool, an electrical grinding tool, an electrical assembling tool, and a power tool for use in railways. Examples of the power tool are an electrical drill, an electrical grinder, an electrical wrench, an electrical screwdriver, an electrical hammer, an electrical impact drill, a concrete vibrator, an electrical planer, and the like. The electrical device is not particularly limited in this embodiment of this application.

For ease of description in the following embodiments, a vehicle is used as an example of the electrical device.

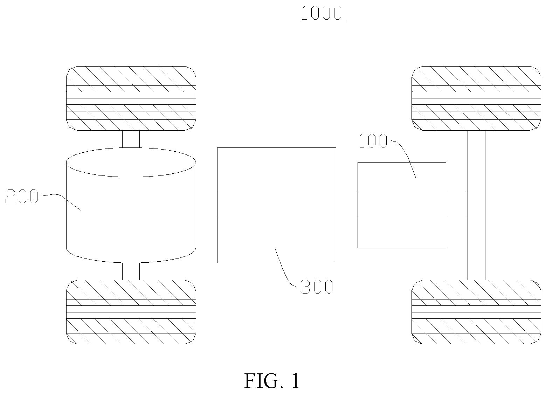

Referring to FIG. 1, FIG. 1 is a schematic structural diagram of a vehicle 1000 according to some embodiments of this application. A battery 100 is disposed inside the vehicle 1000. The battery 100 may be disposed at the bottom, front, or rear of the vehicle 1000. The battery 100 may be configured to supply power to the vehicle 1000. For example, the battery 100 may serve as an operating power supply of the vehicle 1000.

The vehicle 1000 may further include a controller 200 and a motor 300. The controller 200 is configured to control the battery 100 to supply power to the motor 300, for example, to meet electrical energy requirements in starting, navigating, or running the vehicle 1000.

In some embodiments of this application, the battery 100 serves not only as an operating power supply of the vehicle 1000, but may also serve as a drive power supply of the vehicle 1000 to provide driving power for the vehicle 1000 in place of or partly in place of oil or natural gas.

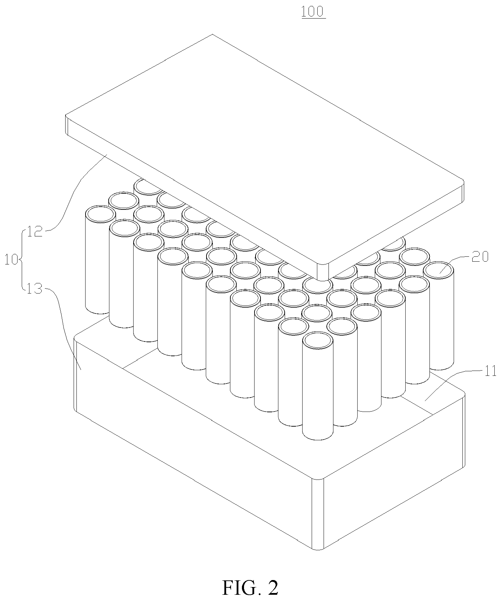

Referring to FIG. 2, FIG. 2 is a schematic structural diagram of a battery 100 according to some embodiments of this application. The battery 100 includes a box 10 and a battery cell 20. The battery cell 20 is accommodated in the box 10.

The box 10 is configured to provide an accommodation space 11 for the battery cell 20. In some embodiments, the box 10 may include a first part 12 and a second part 13. The first part 12 and the second part 13 fit and cover each other to define the accommodation space 11 configured to accommodate the battery cell 20. Definitely, a junction between the first part 12 and the second part 13 may be sealed by a sealing element (not shown in the drawing). The sealing element may be a sealing ring, a sealant, or the like.

The first part 12 and the second part 13 may be in various shapes, such as a cuboid or cylinder. The first part 12 is a hollow structure opened up at one end, in which an accommodation portion configured to accommodate the battery cell 20 is formed. The second part 13 may also be a hollow structure opened up at one side, in which an accommodation portion configured to accommodate the battery cell 20 is formed. The open-up side of the second part 13 fits and covers the open-up side of the first part 12 to form a box 10 that includes a hermetically sealed space. Alternatively, the first part 12 is a hollow structure opened up at one end, in which an accommodation portion configured to accommodate the battery cell 20 is formed, and the second part 13 is a plate-shaped structure. The second part 13 fits and covers the open-up side of the first part 12 to form the box 10 that includes a hermetically sealed space.

There may be one or more battery cells 20 in the battery 100. If there are a plurality of battery cells 20, the plurality of battery cells 20 may be connected in series, parallel, or series-and-parallel pattern. The series-and-parallel pattern means a combination of series connection and parallel connection of the plurality of battery cells 20. The plurality of battery cells 20 may be directly connected in series, parallel, or series-and-parallel pattern, and then the whole of the plurality of battery cells 20 may be accommodated in the box 10. Alternatively, the plurality of battery cells 20 may be connected in series, parallel, or series-and-parallel pattern to form a battery module first. A plurality of battery modules are then connected in series, parallel, or series-and-parallel pattern to form a whole for being accommodated in the box 10. The battery cell 20 may be in the shape of a cylinder, flat body, cuboid, or the like. FIG. 2 exemplarily shows a battery cell 20 in a cylindrical shape.

In some embodiments, the battery 100 may further include a busbar component (not shown in the drawing). The plurality of battery cells 20 may be electrically connected by the busbar component, so as to implement series, parallel, or series-and-parallel connection between the plurality of battery cells 20.

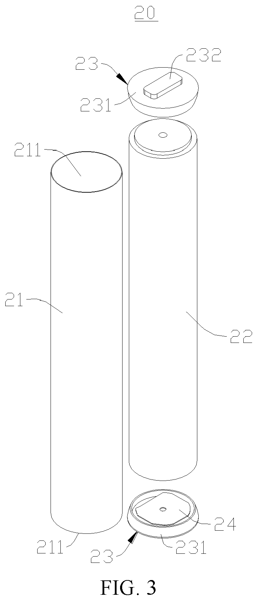

Referring to FIG. 3, FIG. 3 is an exploded view of a battery cell 20 according to some embodiments of this application. The battery cell 20 may include a housing 21, an electrode assembly 22, and an end cap assembly 23. The housing 21 includes an opening 211. The electrode assembly 22 is accommodated in the housing 21. The end cap assembly 23 is configured to cover and seal the opening 211.

The housing 21 may be in various shapes such as a cylinder or cuboid. The shape of the housing 21 may be determined depending on the specific shape of the electrode assembly 22. For example, if the electrode assembly 22 is a cylindrical structure, the housing 21 may be a cylindrical structure. If the electrode assembly 22 is a cuboidal structure, the housing 21 may be a cuboidal structure. FIG. 3 exemplarily shows a housing 21 and an electrode assembly 22 in a cylindrical shape.

The housing 21 may be made of a variety of materials such as copper, iron, aluminum, stainless steel, or aluminum alloy, without being particularly limited herein.

The electrode assembly 22 may include a positive electrode plate (not shown in the drawing), a negative electrode plate (not shown in the drawing), and a separator (not shown in the drawing).

The positive electrode plate includes a positive current collector and a positive active material layer. A surface of the positive current collector is coated with the positive active material layer. Of the positive current collector, a part uncoated with the positive active material layer protrudes from a part coated with the positive active material layer. The part, uncoated with the positive active material layer, of the positive current collector, serves as a positive tab. Using a lithium-ion battery as an example, the positive current collector may be made of aluminum, and a positive active material may be lithium cobalt oxide, lithium iron phosphate, ternary lithium, lithium manganese oxide, or the like. The negative electrode plate includes a negative current collector and a negative active material layer. A surface of the negative current collector is coated with the negative active material layer. Of the negative current collector, a part uncoated with the negative active material layer protrudes from a part coated with the negative active material layer, and the part uncoated with the negative active material layer serves as a negative tab. The negative current collector may be made of copper, and a negative active material may be carbon, silicon, or the like.

The electrode assembly 22 may be a jelly-roll structure formed by winding the positive electrode plate, the separator, and the negative electrode plate. The electrode assembly 22 further includes a positive tab (not shown in the drawing) and a negative tab (not shown in the drawing). The part, uncoated with a positive active material layer, of the positive current collector in the positive electrode plate may serve as the positive tab. The part, uncoated with a negative active material layer, of the negative current collector in the negative electrode plate may serve as the negative tab.

The end cap assembly 23 is configured to cover and seal the opening 211 of the housing 21 to form a hermetically sealed accommodation cavity (not shown in the drawing). The accommodation cavity is configured to accommodate the electrode assembly 22. The accommodation cavity is further configured to accommodate an electrolyte such as an electrolytic solution. The end cap assembly 23 is a component configured to output electrical energy of the electrode assembly 22. Electrode terminals 232 in the end cap assembly 23 are configured to be electrically connected to the electrode assembly 22. To be specific, the electrode terminals 232 are electrically connected to tabs of the electrode assembly 22.

It is hereby noted that the number of openings 211 of the housing 21 may be one or two. If the number of openings 211 of the housing 21 is one, the number of end cap assemblies 23 may also be one, and two electrode terminals 232 may be disposed in the end cap assembly 23. The two electrode terminals 232 are configured to be electrically connected to the positive tab and the negative tab of the electrode assembly 22 respectively. The two electrode terminals 232 in the end cap assembly 23 are a positive electrode terminal 232 and a negative electrode terminal 232 respectively. As shown in FIG. 3, if there are two openings 211 of the housing 21, for example, if the two openings 211 are disposed on two opposite sides of the housing 21 respectively, the number of end cap assemblies 23 may be two. The two end cap assemblies 23 fit and cover the two openings 211 of the housing 21 respectively. In this case, the electrode terminal 232 in one end cap assembly 23 may be a positive electrode terminal and configured to be electrically connected to the positive tab of the electrode assembly 22. The electrode terminal 232 in the other end cap assembly 23 may be a negative electrode terminal and configured to be electrically connected to the negative electrode plate of the electrode assembly 22.

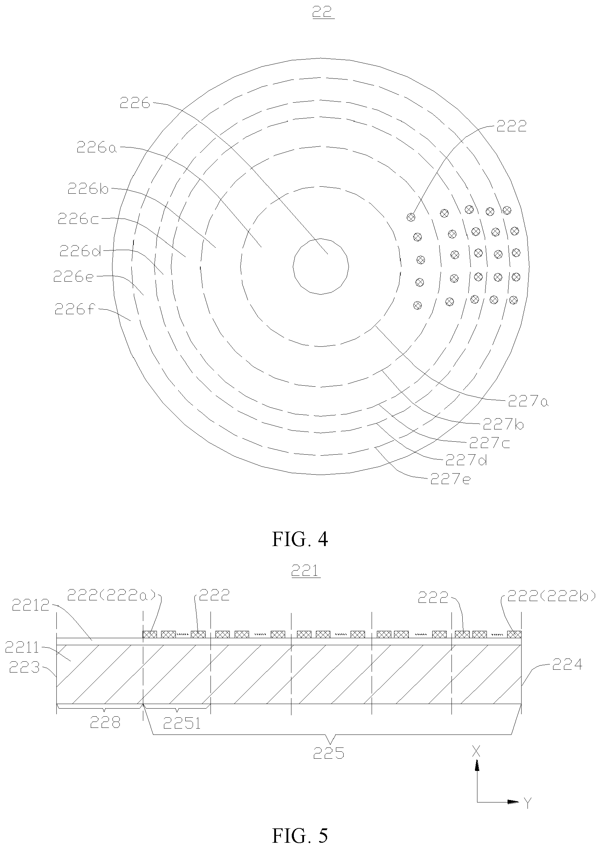

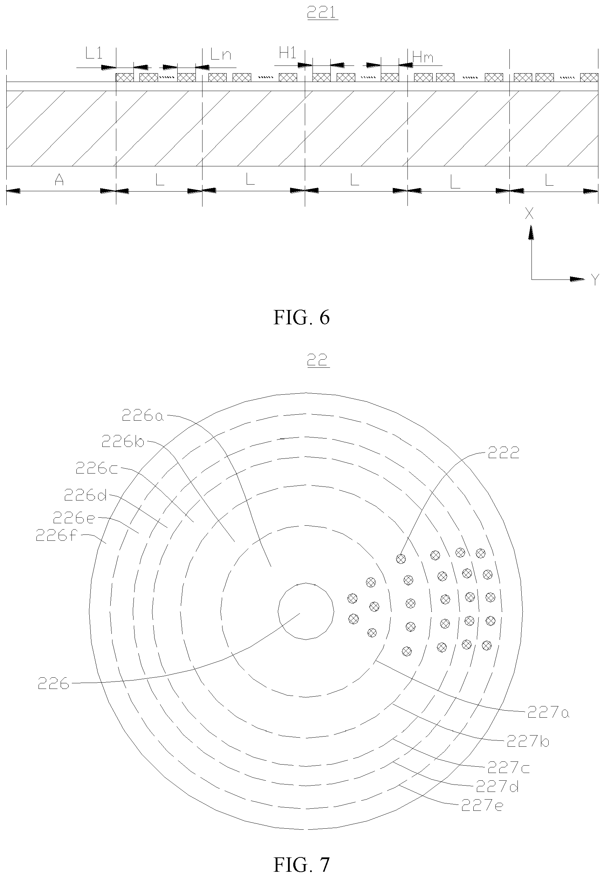

Referring to FIG. 4, FIG. 5, and FIG. 6, FIG. 4 is a schematic structural diagram of an electrode assembly 22 according to some embodiments of this application; FIG. 5 is a schematic diagram of an unwound first electrode plate 221 according to some embodiments of this application; and FIG. 6 is a schematic diagram of dimensions of an unwound first electrode plate according to some embodiments of this application. The battery cell 20 includes the electrode assembly 22. The electrode assembly 22 includes a first electrode plate 221. A plurality of weld portions 222 are disposed on one side of the first electrode plate in a width direction X, and the plurality of weld portions 222 are spaced apart along a length direction Y of the first electrode plate. The electrode assembly 22 has a j elly-roll structure. The first electrode plate 221 includes a winding start end 223 and a winding termination end 224. A weld portion closest to the winding start end 223 among the plurality of weld portions 222 is a first weld portion 222a. A weld portion closest to the winding termination end 224 among the plurality of weld portions 222 is a second weld portion 222b. The first electrode plate 221 includes a body section 225. The body section 225 is from an edge of the first weld portion 222a to an edge of the second weld portion 222b, the edge of the first weld portion being close to the winding start end 223, and the edge of the second weld portion being close to the winding termination end 224. The body section 225 is equally divided into a plurality of subsections 2251, each subsection being L in length. A total length of the weld portions 222 of each subsection 2251 is not less than 5%×L, where 200 mm ≤ L ≤ 1200 mm.

Along the width direction X of the first electrode plate, the first electrode plate 221 includes a coated region 2211 coated with an active material layer and an uncoated region 2212 not coated with the active material layer. The first electrode plate 221 may be a positive electrode plate or a negative electrode plate. The electrode assembly 22 further includes a second electrode plate. If the first electrode plate 221 is a positive electrode plate, the coated region 2211 is coated with a positive active material, and the second electrode plate is a negative electrode plate. If the first electrode plate 221 is a negative electrode plate, the coated region 2211 is coated with a negative active material, and the second electrode plate is a positive electrode plate. In an embodiment in which the tab of the electrode assembly 22 is an all-tab of a jelly-roll type electrode assembly, the tab of the first electrode plate 221 and the tab of the second electrode plate are located at two axial ends of the electrode assembly 22 respectively.

The winding start end 223 means a start point of winding the first electrode plate 221 in a case of winding the first electrode plate 221 to form the electrode assembly 22. After completion of the winding, the winding start end 223 is located at the innermost side of the electrode assembly 22 relative to other positions of the first electrode plate 221.

The winding termination end 224 means a termination point of winding the first electrode plate 221 in a case of winding the first electrode plate 221 to form the electrode assembly 22. After completion of the winding, the winding termination end 224 is located at the outermost side of the electrode assembly 22 relative to other positions of the first electrode plate 221.

When the first electrode plate 221 is in an unwound state, the length of a weld portion 222 means a distance between an edge of the weld portion 222 close to the winding start end 223 and an edge close to the winding termination end 224, that is, the dimension of the weld portion 222 in the length direction Y of the first electrode plate. The total length of the weld portions 222 of the subsection 2251 means a sum of the lengths of all the weld portions 222 of the subsection 2251.

Each subsection 2251 may include one or more weld portions 222. In an embodiment in which each subsection 2251 includes a plurality of weld portions 222, the plurality of weld portions 222 may be evenly spaced apart or unevenly spaced apart.

The length of the body section 225 needs to be not less than the sum of the lengths of the two subsections 2251. That is, the body section 225 is equally divided into at least two subsections 2251.

In practical welding, the flattened tab of the first electrode plate 221 of the electrode assembly 22 is divided along the radial direction into a plurality of regions around a winding center of the electrode assembly 22. Each region includes at least one circle of the first electrode plate 221. Each region may include one or more subsections 2251. Each subsection 2251 may be wound for at least one circle.

Exemplarily, as shown in FIG. 4, around the winding center hole 226 of the electrode assembly 22, the tab portion of the first electrode plate 221 is divided into six concentrically arranged regions. The six regions are defined as a first region 226a, a second region 226b, a third region 226c, a fourth region 226d, a fifth region 226e, and a sixth region 226f respectively from inside out. In FIG. 4, the six regions are delineated by a first circle 227a, a second circle 227b, a third circle 227c, a fourth circle 227d, and a fifth circle 227e shown by dashed lines, respectively. Each region includes a subsection 2251.

The term "from inside out" in this application is termed relative to the winding center of the electrode assembly 22. Of two regions, one close to the winding center is located inside the one away from the winding center.

In the verification of a battery cell, a discharge internal resistance of the battery discharged within 0.1 second is used as an ohmic resistance. The value of the ohmic resistance affects the charge-and-discharge internal resistance and the charge-and-discharge flow capacity of the battery cell 20. To determine how a ratio of the total length of the weld portions 222 of the subsection 2251 to the length of the subsection 2251 affects the charge-and-discharge internal resistance and charge-and-discharge flow capacity of the battery cell 20, the following test is performed:

Test conditions: The length of the subsection is 800 mm. The ambient temperature of the test is 25 °C. State of charge (SOC) means a ratio of the remaining capacity of a battery cycled for a period of time or left unused for a long time to a fully charged capacity of the battery, usually expressed as a percentage. The value range of the SOC is 0 to 1. The SOC value 0 means a fully discharged state of the battery. The SOC value 1 means a fully charged state of the battery. In this application, the ohmic internal resistance and full-battery internal resistance of the battery cell 20 are tested by using a SOC value 0.5 as an example. To obtain the full-battery internal resistance of the battery cell 20, a direct-current internal resistance (DCIR) test is carried out. The full-battery internal resistance of the battery cell 20 includes two parts: ohmic internal resistance and polarization internal resistance. The direct-current internal resistance (DCIR) test is a process of measuring the internal resistance by taking both parts into account. The DCIR is also known as a dynamic internal resistance.

**Table 1 Test results of ohmic internal resistance and full-battery internal resistance corresponding to different ratios of total length of weld portions to length of subsection**

| | | | | | | | | | | | |
|---|---|---|---|---|---|---|---|---|---|---|---|
| DCIR measured at 25 °C and 0.5 SOC | Type and serial number of specimen | Total length of weld portions = 10% × L (mm) | | Total length of weld portions = 5.8% × L (mm) | | Total length of weld portions = 5% × L (mm) | | Total length of weld portions = 4.5% × L (mm) | | Total length of weld portions = 3% × L (mm) | |
| | | Specimen i | Specimen ii | Specimen iii | Specimen iv | Specimen v | Specimen vi | Specimen vii | Specimen viii | Specimen ix | Specimen x |
| | Ohmic internal resistance | 0.79 | 0.78 | 0.78 | 0.79 | 0.79 | 0.78 | 0.83 | 0.84 | 0.88 | 0.87 |
| | Full-battery internal resistance | 1.12 | 1.11 | 1.11 | 1.11 | 1.11 | 1.11 | 1.11 | 1.12 | 1.21 | 1.20 |

As can be seen from the above test results, when the ratio of the total length of weld portions 222 of the subsection 2251 to the length of the subsection 2251 is 3% to 5%, both the ohmic internal resistance and full-battery internal resistance of the battery cell 20 decrease gradually with the increase of the ratio of the total length of weld portions 222 of the subsection 2251 to the length of the subsection 2251. When the ratio of the total length of weld portions 222 of the subsection 2251 to the length of the subsection 2251 is greater than or equal to 5%, both the ohmic internal resistance and full-battery internal resistance of the battery cell 20 tend to be stable. Therefore, the total length of weld portions 222 of the subsection 2251 in this application is not less than 5% of the length of the subsection 2251, so that the battery cell 20 possesses a relatively low charge-and-discharge internal resistance and a relatively high charge-and-discharge flow capacity.

In existing technologies, the current collection component 24 (shown in FIG. 3) is welded to the electrode assembly 22 by continuous linear laser welding or pulsation welding, leaving weld marks to be X-shaped, ring-shaped, or the like. As can be seen from an unwound electrode plate, along a length direction of the electrode plate, the weld portions in some sections are relatively dense, the weld portions in other sections are relatively sparse, and the distribution of the weld portions on the electrode plate is nonuniform. For a section with sparse weld portions, an effective welding length of the electrode plate (that is, a total length of the weld portions of the section) is not enough to match the length of the electrode plate. Consequently, the flow capacity of electrical current between the electrode plate and the current collection component 24 is low, and the internal resistance of the battery cell is high, thereby impairing the power performance of the battery cell 20. By contrast, in the above technical solution, after the current collection component 24 is welded to one side of the first electrode plate along the width direction X, a plurality of spaced-out weld portions 222 are formed in the length direction Y of the first electrode plate. The body portion defined by the first weld portion 222a and the second weld portion 222b on the first electrode plate 221 is divided into a plurality of subsections 2251 of equal length along the length direction Y of the first electrode plate, the first weld portion being close to the winding start end 223, and the second weld portion being close to the winding termination end 224. A total length of the weld portions 222 of each subsection 2251 is not less than 5% of the length of the subsection 2251. In this way, the distribution of the weld portions 222 formed by the welding between the first electrode plate 221 and the current collection component 24 is more reasonable, thereby reducing the internal resistance of the battery cell 20, satisfying the practical flow capacity requirement, and in turn, improving the power performance of the battery cell 20. The length of each subsection 2251 ranges from 200 mm to 1200 mm, thereby making the winding length of the first electrode plate 221 meet practical product requirements and achieving a relatively high energy density of the battery cell 20.

Referring to FIG. 5 and FIG. 6, in some embodiments, an absolute value of a difference of the total length of the weld portions 222 between any two subsections 2251 is less than or equal to 10 mm.

In FIG. 5 and FIG. 6, the lengths of the weld portions 222 in one of any two subsections 2251 are defined as L₁, ..., Lₙ, respectively; and the lengths of the weld portions 222 in the other of any two subsections 2251 are defined as H₁, ..., Hₘ, where n and m are both natural numbers greater than or equal to 1, satisfying: -10 mm ≤ (L₁ +...+ Lₙ) - (Hi +...+ Hₘ) ≤ 10 mm.

By controlling the absolute value of the difference of the total length of the weld portions 222 between any two subsections 2251 to be less than or equal to 10 mm, the difference of the total length of the weld portions 222 between different subsections 2251 is minimized, thereby making the distribution of the weld portions 222 more reasonable, reducing the internal resistance of the battery cell 20, making the flow capacity difference relatively small between different subsections 2251, meeting the practical flow capacity requirement, and in turn, improving the power performance of the battery cell 20. Controlling the absolute value of the difference of the total length of the weld portions 222 between any two subsections 2251 to be less than or equal to 10 mm is equivalent to controlling a discrepancy of the welding width between different subsections 2251 to be less than or equal to 10 mm. Allowing the discrepancy of the total welding length between the subsections 2251 can reduce welding difficulty.

In some embodiments, the total length of the weld portions 222 is identical between any two subsections 2251.

That the total length of the weld portions 222 is identical between any two subsections 2251 means that the difference of the total length of the weld portions 222 between any two subsections 2251 is zero.

When the total length of the weld portions 222 is identical between any two subsections 2251, there is no difference of the total length of the weld portions 222 between different subsections 2251, thereby making the distribution of the weld portions 222 more reasonable, minimizing the internal resistance of the battery cell 20, making the flow capacity identical between different subsections 2251, meeting the practical flow capacity requirement, and in turn, improving the power performance of the battery cell 20.

In some embodiments, an absolute value of a difference of the number of the weld portions 222 between any two subsections 2251 is less than or equal to 10.

In FIG. 5, -10 ≤ n - m ≤ 10. That is, the absolute value of the difference of the number of the weld portions 222 between any two subsections 2251 is less than 10.

By controlling the absolute value of the difference of the number of the weld portions 222 between any two subsections 2251 to be less than or equal to 10 mm, the difference of the number of the weld portions between different subsections 2251 is minimized, thereby reducing the internal resistance of the battery cell 20, making the flow capacity difference relatively small between different subsections 2251, meeting the practical flow capacity requirement, and in turn, improving the power performance of the battery cell 20. Controlling the absolute value of the difference of the number of the weld portions 222 between any two subsections 2251 to be less than or equal to 10 is equivalent to allowing a discrepancy of the number of the weld portions 222 between different subsections 2251. Allowing the discrepancy of the total welding length between the subsections 2251 can reduce welding difficulty.

In some embodiments, the number of the weld portions 222 is identical between any two subsections 2251.

That the number of the weld portions 222 is identical between any two subsections 2251 means that the difference of the number of the weld portions 222 between any two subsections 2251 is zero, that is, n - m = 0, as shown in FIG. 6. As shown in FIG. 4, the second region 226b, the third region 226c, the fourth region 226d, the fifth region 226e, and the sixth region 226f each include a subsection 2251. The number of weld portions 222 is identical between the second region 226b, the third region 226c, the fourth region 226d, the fifth region 226e, and the sixth region 226f.

When the number of the weld portions 222 is identical between any two subsections 2251, the difference of the total length of the weld portions 222 between different subsections 2251 is minimized, thereby making the distribution of the weld portions 222 more reasonable, reducing the internal resistance of the battery cell 20, making the flow capacity identical between different subsections 2251, meeting the practical flow capacity requirement, and in turn, improving the power performance of the battery cell 20.

Still referring to FIG. 4, FIG. 5, and FIG. 6, in some embodiments, the first electrode plate 221 further includes a winding start section 228 contiguous to the body section 225. The winding start section 228 is from the winding start end 223 to the edge of the first weld portion 222a, the edge being close to the winding start end 223.

That the body section 225 is contiguous to the winding start section 228 means that the winding start section 228 is directly connected to the body section 225. After completion of the winding, the circle formed by winding the winding start section 228 is located inside the circle formed by winding the body section 225. As shown in FIG. 4, FIG. 5, and FIG. 6, the winding start section 228 is located in the first region 226a, and includes no weld portion 222.

In some embodiments, the first electrode plate 221 may include only the winding start section 228 and the body section 225. In some other embodiments, the first electrode plate 221 may include only the body section 225.

The winding start section 228 is from the winding start end 223 to the edge of the first weld portion 222a, the edge being close to the winding start end 223. To be specific, the winding start end 223 and the edge of the first weld portion 222a define the winding start section 228, the edge of the first weld portion being close to the winding start end 223. In other words, the winding start end 223 goes beyond the first weld portion 222a. No weld portion 222 is formed on the winding start section 228, so that there is no welding relationship between the winding start section 228 and the current collection component 24 (shown in FIG. 3), and a part of the current collection component 24 (shown in FIG. 3) corresponding to the tab of the winding start section 228 is not welded, and may be configured to be welded to the electrode terminal 232, so as to output electrical energy of the battery cell 20.

The length of the winding start section 228 may vary between different battery cells 20. In some embodiments, the winding start section 228 is A in length, and satisfies A ≤ L.

The length of the winding start section 228 means, when the first electrode plate 221 is in an unwound state, a distance between the winding start end 223 and the edge of the first weld portion 222a, the edge being close to the winding start end 223.

Along the length direction Y of the first electrode plate, the distance between the winding start end 223 and the first weld portion 222a is less than a length of a subsection. To be specific, the length of the winding start section 228 without a weld portion 222 is less than the length of a subsection 2251 with a weld portion 222, thereby preventing the section without a weld portion 222 on the first electrode plate 221 from being excessively long, and ensuring stable output of electrical energy of the battery cell 20.

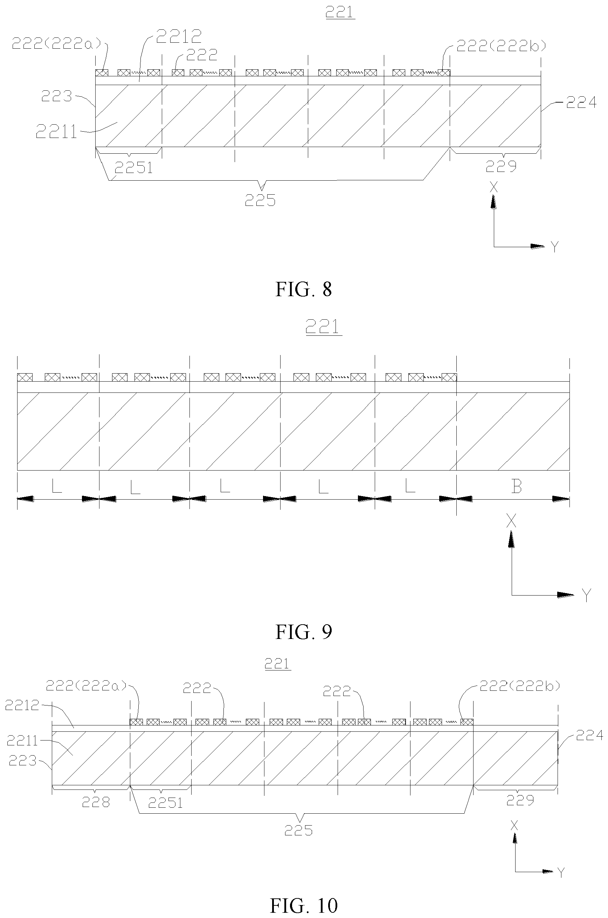

Referring to FIG. 7, FIG. 8, and FIG. 9, FIG. 7 is a schematic structural diagram of an electrode assembly 22 according to some other embodiments of this application; FIG. 8 is a schematic diagram of an unwound first electrode plate 221 according to some other embodiments of this application; and FIG. 9 is a schematic diagram of dimensions of an unwound first electrode plate 221 according to some other embodiments of this application. In some embodiments, the first electrode plate 221 further includes a winding termination section 229 contiguous to the body section 225. The winding termination section 229 is from the winding termination end 224 to the edge of the second weld portion 222b, the edge being close to the winding termination end 224.

That the body section 225 is contiguous to the winding termination section 229 means that the winding termination section 229 is directly connected to the body section 225. After completion of the winding, the circle formed by winding the winding termination section 229 is located outside the circle formed by winding the body section 225. As shown in FIG. 6 and FIG. 7, the winding termination section 229 is located in the sixth region 226f, and includes no weld portion 222.

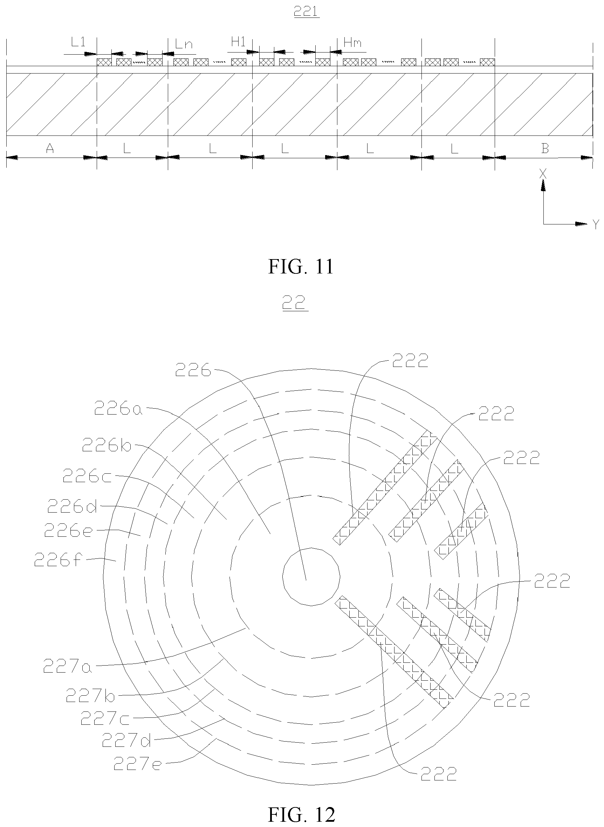

In some embodiments, the first electrode plate 221 may include only the winding termination section 229 and the body section 225. In some other embodiments, as shown in FIG. 10 and FIG. 11, the first electrode plate 221 may include a winding start section 228, a body section 225, and a winding termination section 229 connected in sequence.

The winding termination section 229 is from the winding termination end 224 to the edge of the second weld portion 222b, the edge being close to the winding termination end 224. To be specific, the winding termination end 224 and the edge of the second weld portion 222b define the winding termination section 229, the edge of the second weld portion being close to the winding termination end 224. In other words, the winding termination end 224 goes beyond the second weld portion 222b. No weld portion 222 is formed on the winding termination section 229, so that there is no welding relationship between the winding termination section 229 and the current collection component 24 (shown in FIG. 3), and a part of the current collection component 24 (shown in FIG. 3) corresponding to the tab portion of the winding termination section 229 is not welded, and may be configured to be welded to the electrode terminal 232, so as to output electrical energy of the battery cell 20.

The length of the winding termination section 229 may vary between different battery cells 20. The length of the winding termination section 229 needs to make the electrode assembly 22 meet the practical requirements. In some embodiments, the winding termination section 229 is B in length, and satisfies B ≤ L.

When the first electrode plate 221 is in an unwound state, the length of the winding termination section 229 means a distance between the winding termination end 224 and the edge of the second weld portion 222b, the edge being close to the winding termination end 224.

Along the length direction Y of the first electrode plate, the length of the winding termination section 229 is less than the length of the subsection 2251. To be specific, the length of the winding start section 228 without a weld portion 222 is less than the length of a subsection 2251 with a weld portion 222, thereby preventing the section without a weld portion 222 on the first electrode plate 221 from being excessively long, and ensuring stable output of electrical energy of the battery cell 20.

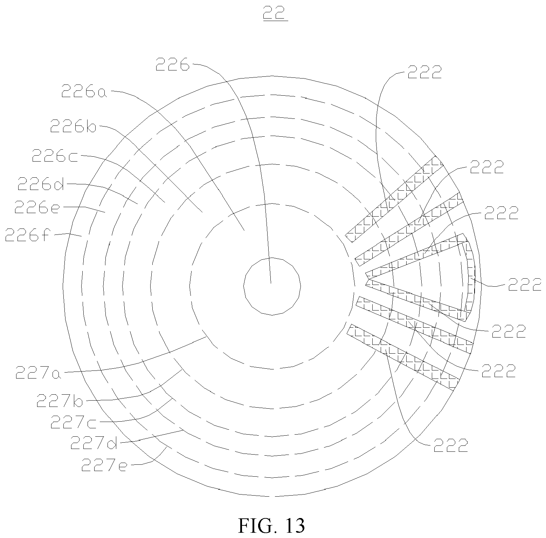

Referring to FIG. 12 and FIG. 13, FIG. 12 is a schematic diagram of an electrode assembly 22 according to still other embodiments of this application; and FIG. 13 is a schematic structural diagram of an electrode assembly 22 according to yet other embodiments of this application. In some embodiments, among two adjacent circles of the first electrode plate 221, the number of the weld portions 222 of a circle close to a winding center of the electrode assembly 22 is less than the number of the weld portions 222 of a circle away from the winding center.

The "two adjacent circles of the first electrode plate 221" may be any two adjacent circles among all circles of the first electrode plate 221, or may be two adjacent circles among just a part of circles of the first electrode plate 221.

As an example, as shown in FIG. 12, each region includes one circle of the first electrode plate 221. In the first region 226a, each circle of the first electrode plate 221 includes two weld portions 222; in the second region 226b, each circle of the first electrode plate 221 includes four weld portions 222; in the third region 226c, each circle of the first electrode plate 221 includes six weld portions 222; in the fourth region 226d, each circle of the first electrode plate 221 includes six weld portions 222; and, in the fifth region 226e, each circle of the first electrode plate 221 includes six weld portions 222. The weld portions 222 are radially distributed.

As shown in FIG. 13, each region includes one circle of the first electrode plate 221. In the second region 226b, some circles of the first electrode plate 221 each include four weld portions 222, some circles of the first electrode plate 221 each include five weld portions 222, and other circles of the first electrode plate 221 each include six weld portions 222. In the third region 226c, each circle of the first electrode plate 221 includes six weld portions 222. In the fourth region 226d, each circle of the first electrode plate 221 includes six weld portions 222. In the fifth region 226e, each circle of the first electrode plate 221 includes six weld portions 222. In the sixth region 226f, some circles of the first electrode plate 221 each include six weld portions 222, and other circles of the first electrode plate 221 each include five weld portions 222. Some weld portions 222 are radially distributed, and some weld portions 222 are connected to form an arc segment around the winding center of the electrode assembly 22. The arc segment is located in the sixth region 226f. The arc segment connects two adjacent radial lines among a plurality of radial lines, each radial line being formed of the weld portions 222.

In other embodiments, the number of the weld portions 222 may be identical between any two adjacent circles of the first electrode plate 221.

For a jelly-roll type electrode assembly 22, among two adjacent circles of the first electrode plate 221, the length of the circle close to the winding center is less than the length of the circle away from the winding center. During welding, the number of weld portions 222 formed on the circle close to the winding center of the jelly-roll type electrode assembly 22 is smaller than the number of weld portions 222 formed on the circle away from the winding center. In this way, the length of each circle of the first electrode plate 221 and the corresponding number of the weld portions 222 on each circle of the first electrode plate 221 match the total length of the weld portions 222, thereby making the distribution of the weld portions 222 more reasonable, reducing the internal resistance of the battery cell 20, meeting the practical flow capacity requirement, and in turn, improving the power performance of the battery cell 20.

Referring to FIG. 3, FIG. 4, FIG. 5, and FIG. 6, in some embodiments, the battery cell 20 further includes a housing 21, an end cap assembly 23, and a current collection component 24. The housing 21 is configured to accommodate the electrode assembly 22. The housing 21 includes an opening 211. The end cap assembly 23 includes an end cap 231 and electrode terminals 232. The end cap 231 is configured to cover the opening 211. Each electrode terminal 232 is mounted on the end cap 231. The current collection component 24 is located between the end cap 231 and the electrode assembly 22, and configured to connect a tab portion of the electrode assembly 22 to the electrode terminal 232. The tab portion is formed by winding an uncoated portion of the first electrode plate 221. At least a part of the current collection component 24 is welded to the tab portion to form the plurality of weld portions 222.

At least a part of the current collection component 24 is welded to the tab portion to form the plurality of weld portions 222. The body portion defined by the first weld portion 222a and the second weld portion 222b on the first electrode plate 221 is divided into a plurality of subsections 2251 of equal length along the length direction Y of the first electrode plate, the first weld portion being close to the winding start end 223, and the second weld portion being close to the winding termination end 224. A total length of the weld portions 222 of each subsection 2251 is not less than 5% of the length of the subsection 2251. In this way, the distribution of the weld portions 222 formed by the welding between the first electrode plate 221 and the current collection component 24 is more reasonable, thereby reducing the internal resistance of the battery cell 20, satisfying the practical flow capacity requirement, and in turn, improving the power performance of the battery cell 20.

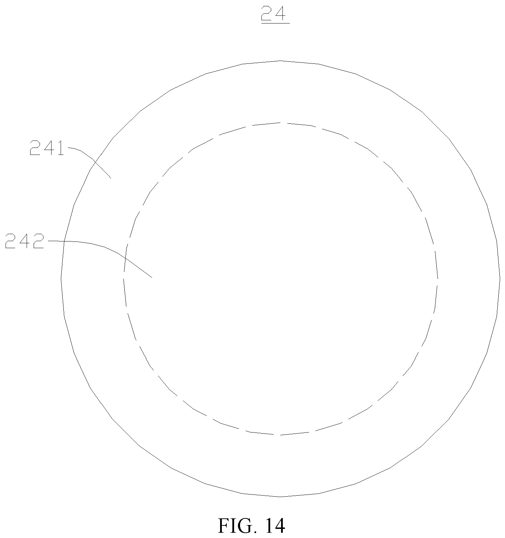

Referring to FIG. 14, FIG. 14 is a schematic diagram of a welded current collection component 24 according to some embodiments of this application. In some embodiments, the first electrode plate 221 further includes a winding start section 228 from the winding start end 223 to the edge of the first weld portion 222a, the edge being close to the winding start end 223. The uncoated region of the body section 225 is wound to form a first part 12 (not shown in the drawing), the uncoated region of the winding start section 228 is wound to form a second part 13 (not shown in the drawing), and the second part 13 is located inside the first part 12 along a radial direction. The current collection component 24 includes a first current collection portion 241 and a second current collection portion 242 arranged continuously along the radial direction. The first current collection portion 241 is arranged opposite to the first part 12 along the width direction X of the first electrode plate and is welded to the first part 12 to form the plurality of weld portions 222. The second current collection portion 242 is arranged opposite to the second part 13 along the width direction X of the first electrode plate and is welded to the electrode terminal 232.

When the first electrode plate 221 is in the wound state, the width direction X of the first electrode plate is consistent with a winding axis direction of the electrode assembly 22. The uncoated region of the first electrode plate 221 is configured to form a tab of the first electrode plate 221. Therefore, both the first part 12 and the second part 13 are the tab of the first electrode plate 221. That the second part 13 is located inside the first part 12 along the radial direction may be: one portion of the second part 13 is located inside the first part 12, and the other portion of the second part 13 and a portion of the first part 12 are located on the same circumference; or, all of the second part 13 is located inside the first part 12, and the first part 12 is disposed peripherally around the second part 13.

That the first current collection portion 241 is disposed opposite to the first part 12 along the width direction X of the first electrode plate means that, along the width direction X of the first electrode plate, a projection of the first part 12 on the current collection component 24 at least partly overlaps the first current collection portion 241. Welding to each other is performed at the overlap part to form a plurality of weld portions 222, thereby implementing electrical connection between the electrode assembly 22 and the current collection component 24. The second current collection portion 242 and the second current collection portion 242 are arranged continuously along the radial direction. The winding start section 228 is from the winding start end 223 to the edge of the first weld portion 222a, the edge being close to the winding start end 223. To be specific, the winding start end 223 and the edge of the first weld portion 222a define the winding start section 228, the edge of the first weld portion being close to the winding start end 223. No weld portion 222 is formed on the winding start section 228, so that there is no welding relationship between the second part 13 and the current collection component 24, the second part being formed by winding the uncoated region of the winding start section 228. No weld marks are formed on the second current collection portion 242 opposite to the second part 13, thereby making it convenient to weld the current collection component 24 to the electrode terminal 232 through the second current collection portion 242 to output electrical energy of the battery cell 20.

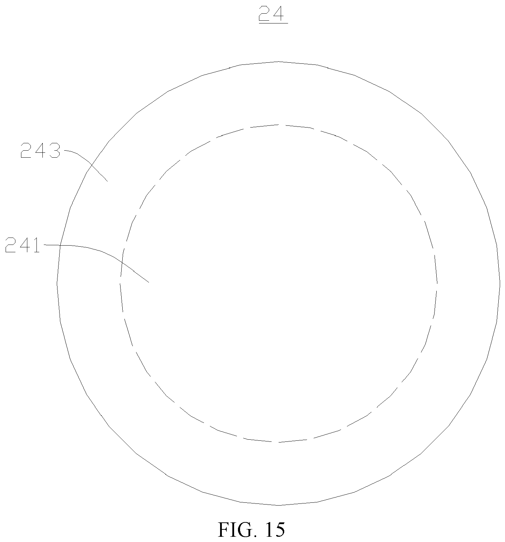

Referring to FIG. 15, FIG. 15 is a schematic diagram of a welded current collection component 24 according to some other embodiments of this application. In some embodiments, the first electrode plate 221 further includes a winding termination section 229 from the winding termination end 224 to the edge of the second weld portion 222b, the edge being close to the winding termination section 229. The uncoated region of the body section 225 is wound to form a first part 12, the uncoated region of the winding termination section 229 is wound to form a third part (not shown in the drawing), and the third part is located outside the first part 12 along the radial direction. The current collection component 24 includes a first current collection portion 241 and a third current collection portion 243 arranged continuously along the radial direction. The first current collection portion 241 is arranged opposite to the first part 12 along the width direction X of the first electrode plate and is welded to the first part 12 to form the plurality of weld portions 222. The third current collection portion 243 is arranged opposite to the third part along the width direction X of the first electrode plate and is welded to the electrode terminal 232.

The uncoated region of the first electrode plate 221 is configured to form a tab of the first electrode plate 221. Therefore, both the first part 12 and the third part are the tab of the first electrode plate 221. That the third part is located outside the first part 12 along the radial direction may be: one portion of the third part is located outside the first part 12, and the other portion of the third part and a portion of the first part 12 are located on the same circumference; or, all of the third part is located inside the first part 12, and the third part is disposed peripherally around the first part 12.

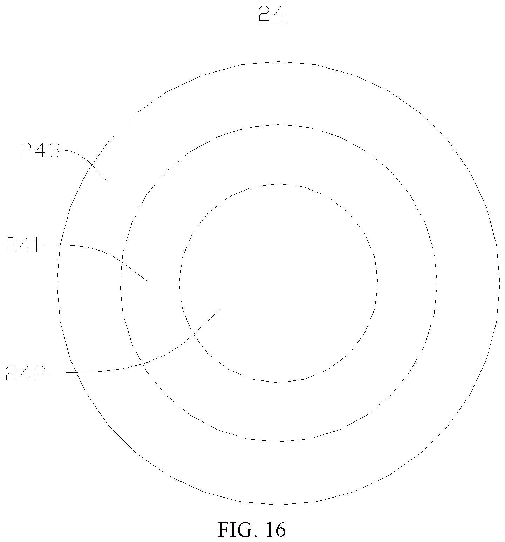

Referring to FIG. 16, FIG. 16 is a schematic diagram of a welded current collection component 24 according to still other embodiments of this application. In an embodiment in which the first electrode plate 221 includes a winding start section 228, a body section 225, and a winding termination section 229, the current collection component 24 may include a second current collection portion 242, a first current collection portion 241, and a third current collection portion 243 arranged from inside out along the radial direction. The first current collection portion 241 is welded to the first part 12. The second current collection portion 242 is arranged opposite to the second part 13 along the width direction X of the first electrode plate. The third current collection portion is arranged opposite to the third part along the width direction X of the first electrode plate. The second current collection portion 242 and the third current collection portion 243 are welded to the electrode terminal 232 to output electrical energy of the battery cell 20.

By welding the first current collection portion 241 to the first part 12, the electrode assembly 22 is electrically connected to the current collection component 24. The third current collection portion 243 and the first current collection portion 241 are arranged continuously along the radial direction. The winding termination section 229 is from the winding termination end 224 to the edge of the second weld portion 222b, the edge being close to the winding termination end 224. To be specific, the winding termination end 224 and the edge of the second weld portion 222b define the winding termination section 229, the edge of the second weld portion being close to the winding termination end 224. No weld portion 222 is formed on the winding termination section 229, so that there is no welding relationship between the third part and the current collection component 24, the third part being formed by winding the uncoated region of the winding termination section 229. No weld marks are formed on the third current collection portion 243 opposite to the third part, thereby making it convenient to weld the current collection component 24 to the electrode terminal 232 through the third current collection portion 243 to output electrical energy of the battery cell 20.

An embodiment of this application provides a cylindrical battery, including a cylindrical housing 21, a cylindrical electrode assembly 22, a current collection component 24, and an end cap assembly 23. The electrode assembly 22 is accommodated in the housing. An end cap 231 of the end cap assembly 23 covers and seals an opening 211 of the housing 21. The electrode assembly 22 includes a first electrode plate 221. The first electrode plate 221 includes a winding start end 223 and a winding termination end 224. A weld portion closest to the winding start end 223 among a plurality of weld portions 222 is a first weld portion 222a. A weld portion closest to the winding termination end 224 among the plurality of weld portions 222 is a second weld portion 222b. The first electrode plate 221 includes a body section 225. The body section is from an edge of the first weld portion 222a to an edge of the second weld portion 222b, the edge of the first weld portion being close to the winding start end 223, and the edge of the second weld portion being close to the winding termination end 224. The body section 225 is equally divided into a plurality of subsections 2251, each subsection being L in length. A total length of the weld portions 222 of each subsection 2251 is not less than 5%×L, where 200 mm ≤ L ≤ 1200 mm. An absolute value of a difference of the total length of the weld portions 222 between any two subsections 2251 is less than or equal to 10 mm. An absolute value of a difference of the number of the weld portions 222 between any two subsections 2251 is less than or equal to 10. The first electrode plate 221 further includes a winding start section 228 contiguous to the body section 225, and includes a winding termination section 229. The winding start section 228 is from the winding start end 223 to the edge of the first weld portion 222a, the edge being close to the winding start end 223. The winding termination section 229 is from the winding termination end 224 to the edge of the second weld portion 222b, the edge being close to the winding termination end 224. The winding start section 228 is A in length, and the winding termination section 229 is B in length, satisfying A ≤ L, and B ≤ L. The current collection component 24 includes a second current collection portion 242, a first current collection portion 241, and a third current collection portion 243 arranged continuously from inside out along a radial direction. An uncoated region of the body section 225 is wound to form a first part 12. An uncoated region of the winding start section 228 is wound to form a second part 13. An uncoated region of the winding termination section 229 is wound to form a third part. Along a width direction X of the first electrode plate, the first current collection portion 241 is arranged opposite to the first part 12 and is welded to the first part 12 to form a plurality of weld portions 222, the second current collection portion 242 is arranged opposite to the second part 13 and is welded to an electrode terminal 232, and the third current collection portion 243 is arranged opposite to the third part and is welded to the electrode terminal 232, so as to output electrical energy of the cylindrical battery.

An embodiment of this application further provides a battery 100, including the battery cell 20 according to any embodiment described above.

An embodiment of this application further provides an electrical device, including the battery 100 according to the above embodiment.

What is described above is merely exemplary embodiments of this application, but is not intended to limit this application. To a person skilled in the art, various modifications and variations may be made to this application. Any modifications, equivalent replacements, improvements, and the like made without departing from the spirit and principles of this application still fall within the protection scope of this application.

## Claims

1. A battery cell, comprising:
an electrode assembly, comprising a first electrode plate, wherein a plurality of weld portions are disposed on one side of the first electrode plate along a width direction, and the plurality of weld portions are spaced apart along a length direction of the first electrode plate; and
the electrode assembly has a jelly-roll structure, and the first electrode plate comprises a winding start end and a winding termination end; a weld portion closest to the winding start end among the plurality of weld portions is a first weld portion, and a weld portion closest to the winding termination end among the plurality of weld portions is a second weld portion; the first electrode plate comprises a body section; the body section is from an edge of the first weld portion to an edge of the second weld portion, the edge of the first weld portion being close to the winding start end, and the edge of the second weld portion being close to the winding termination end; the body section is equally divided into a plurality of subsections, each subsection being L in length; and a total length of the weld portions of each subsection is not less than 5%×L, wherein 200 mm ≤ L ≤ 1200 mm.

2. The battery cell according to claim 1, wherein an absolute value of a difference of the total length of the weld portions between any two subsections is less than or equal to 10 mm.

3. The battery cell according to claim 1 or 2, wherein the total length of the weld portions is identical between any two subsections.

4. The battery cell according to any one of claims 1 to 3, wherein an absolute value of a difference of a number of the weld portions between any two subsections is less than or equal to 10.

5. The battery cell according to any one of claims 1 to 4, wherein a number of the weld portions is identical between any two subsections.

6. The battery cell according to any one of claims 1 to 5, wherein the first electrode plate further comprises a winding start section contiguous to the body section, and the winding start section is from the winding start end to the edge of the first weld portion, the edge being close to the winding start end.

7. The battery cell according to claim 6, wherein the winding start section is A in length, satisfying A ≤ L.

8. The battery cell according to any one of claims 1 to 7, wherein the first electrode plate further comprises a winding termination section contiguous to the body section, and the winding termination section is from the winding termination end to the edge of the second weld portion, the edge being close to the winding termination end.

9. The battery cell according to claim 8, wherein the winding termination section is B in length, satisfying B ≤ L.

10. The battery cell according to any one of claims 1 to 9, wherein, among two adjacent circles of the first electrode plate, a number of the weld portions of a circle close to a winding center of the electrode assembly is less than a number of the weld portions of a circle away from the winding center.

11. The battery cell according to any one of claims 1 to 10, wherein the battery cell further comprises:
a housing, configured to accommodate the electrode assembly, wherein the housing comprises an opening;
an end cap assembly, comprising an end cap and electrode terminals, wherein the end cap is configured to cover the opening, and each electrode terminal is mounted on the end cap; and
a current collection component, located between the end cap and the electrode assembly, and configured to connect a tab portion of the electrode assembly to the electrode terminal, the tab portion is formed by winding an uncoated portion of the first electrode plate, and at least a part of the current collection component is welded to the tab portion to form the plurality of weld portions.

12. The battery cell according to claim 11, wherein the first electrode plate further comprises a winding start section from the winding start end to the edge of the first weld portion, the edge being close to the winding start end; and the uncoated region of the body section is wound to form a first part, the uncoated region of the winding start section is wound to form a second part, and the second part is located inside the first part along a radial direction; and
the current collection component comprises a first current collection portion and a second current collection portion arranged continuously along the radial direction, the first current collection portion is arranged opposite to the first part along the width direction of the first electrode plate and is welded to the first part to form the plurality of weld portions, and the second current collection portion is arranged opposite to the second part along the width direction of the first electrode plate and is welded to the electrode terminal.

13. The battery cell according to claim 11 or 12, wherein the first electrode plate further comprises a winding termination section from the winding termination end to the edge of the second weld portion, the edge being close to the winding termination end; and the uncoated region of the body section is wound to form a first part, the uncoated region of the winding termination section is wound to form a third part, and the third part is located outside the first part along a radial direction; and
the current collection component comprises a first current collection portion and a third current collection portion arranged continuously along the radial direction, the first current collection portion is arranged opposite to the first part along the width direction of the first electrode plate and is welded to the first part to form the plurality of weld portions, and the third current collection portion is arranged opposite to the third part along the width direction of the first electrode plate and is welded to the electrode terminal.

14. A battery, comprising the battery cell according to any one of claims 1 to 13.

15. An electrical device, comprising the battery according to claim 14.
